# EUROPEAN PATENT SPECIFICATION

(11) **EP 0 255 212 B1**
(45) Date of publication and mention of the grant of the patent: **17.03.1993**
(21) Application number: 87304844.1
(22) Date of filing: 02.06.1987
(51) Int. Cl.: B42F 5/00, B42F 5/04, G03B 21/64

(54) **Method and apparatus for simultaneously inserting planar articles into a file sheet**
Verfahren und Vorrichtung zum gleichzeitigen Einschieben von flachen Gegenständen in ein Albumblatt
Procédé et dispositif d'insertion simultanée d'articles plans dans une feuille de classement

(30) Priority: 31.07.1986 JP 181148/86
(43) Date of publication of application: 03.02.1988
(73) Proprietor: SLIDEX CORPORATION, Tokyo (JP)
(72) Inventor: Ozeki, Jiro, Toshima-ku Tokyo (JP)
(74) Representative: Singleton, Jeffrey

(56) References cited:
- DE-A- 3 230 541
- US-A- 4 330 980

## Description

This invention relates to a method and apparatus for simultaneously inserting a number of laminar or planar articles such as mounted slide films, slides, coins and the like, into a file sheet which is adapted to hold such articles.

DE-A-3230541 discloses a file sheet comprising a transparent or translucent, light-transmissible and diffusible rectangular plastics sheet having a plurality of rectangular pockets defined by longitudinally and transversely extending spaced ribs intersecting with each other, each pocket being provided with a retaining means projecting inwardly from each longitudinal rib which forms a side wall of the pocket.

A number of laminar articles such as mounted slide films, slides or coins, may be held and stored in an ordered or aligned array in the file sheet by manually forcing the articles successively one by one between and beneath the retaining means of the respective pockets and the base of the file sheet until the articles are fitted and held in the respective pockets.

However, the operation of storing and holding a number of laminar articles in an ordered array in a file sheet by manually inserting the materials successively one by one into the respective pockets involves much trouble and time with inspecting the contents of photos, photographic slides, for example, one by one and inserting them successively into the file sheet pockets. Moreover, if a user puts slide films or other articles in the pockets in a wrong order, he (or she) must remove successively all the incorrectly placed articles and place them in the correct pockets. In addition, if planar articles are held in the pockets with an improper attitude as upside down, or with face downwards, or with the lateral side extending transversely of the file sheet, the user must take the trouble to remove the articles and orient and reinsert them correctly into the pockets.

Accordingly, it is a primary object of the present invention to provide a method and apparatus for laminar articles such as mounted slide films, slides, coins and the like, which is easy to handle and eliminates the aforesaid inconvenience and trouble with the prior art by enabling simultaneous insertion of a number of articles into pockets of a file sheet adapted to hold and store the articles in an ordered array.

According to one aspect of the present invention there is provided a method of simultaneously inserting a number of laminar articles (a), such as mounted slide films, slides, coins and the like into a file sheet 18, said file sheet comprising a base sheet 12 having a plurality of recessed pockets 10 arranged both in rows and in columns, each of said pockets having a pair of retaining tabs 14 on opposed sides for retaining opposed side grasp portions (b) of one of the laminar articles against the base sheet 12 in each pocket 10, the method comprising the steps of:
providing a slide structure 40 having a plurality of compartments 30 which are, when positioned generally parallel with the plane of the mounting plate, in alignment with the corresponding pockets 10 of the file sheet 18;
positioning said slide structure 40 at an initial intermediate position relative to said file sheet 18;
placing the laminar articles (a) successively in the respective compartments 30 of said slide structure 40 so that the rear edges of the laminar articles are in abutting engagement with the rear walls of the respective compartments 30 while the front edges of the laminar materials rest on the retaining tabs 14 of said file sheet 18;
moving the slide structure 40 rearwardly from the initial intermediate position to a predetermined rearward position to place the front ends of the grasp portions (b) of the laminar articles at rearwardly open inlets of the grasping gaps between said opposed side retaining tabs 14 of the respective pockets 10 and the base sheet 12; and
then moving the slide structure forwardly from said rearward position toward said initial intermediate position to move all the laminar articles (a) simultaneously forwardly beneath said retaining tabs 14 and through said inlets into said gaps to be retained by said tabs against the base sheet.

According to another aspect of the present invention, there is provided apparatus for simultaneously inserting a number of laminar articles into a file sheet, comprising:
a file sheet comprising a base sheet having a plurality of rectangular recessed pockets arranged both in rows and in columns, each of the pockets having a pair of retaining tabs on its opposed sides for retaining opposite side grasp portions of one of the laminar articles against the base sheet in each pocket;
a file sheet mounting plate for removably securing the file sheet in position thereon;
a slide structure having a plurality of compartments which are, when positioned generally parallel with the plane of the mounting plate, are in alignment with the corresponding pockets of the file sheet, and having depending pawl members provided in the lower portions of the respective compartments, the pawl members being engageable with the rear ends of the opposed sides grasp portions of the corresponding laminar articles to force the laminar articles into the respective pockets beneath the retaining tabs;
slide means for reciprocally moving the slide structure longitudinally through a predetermined stroke; and
means for moving the slide structure towards and away from the plane of the mounting plate.

If desired, the mounting plate may be made of a light-transmissable and light diffusing material, and illumination means disposed beneath the transparent or translucent mounting plate to form a light box.

These and other objects and features of the invention are more fully disclosed in the following specification, by way of example, with reference to the accompanying drawings, in which:
Figure 1 is a perspective view of apparatus according to one embodiment of this invention;
Figure 2 is an enlarged perspective view of the principal part of the apparatus shown in Figure 1;
Figure 3 is a perspective view of the apparatus shown in Figure 1 illustrating the apparatus in an open position,
Figure 4 is an enlarged perspective view of a portion of Figure 3;
Figure 5 is a cross-sectional view of the apparatus illustrating an initial position thereof;
Figure 6 is a cross-sectional view similar to Figure 5 but illustrating the apparatus in an initial loading position;
Figure 7 is a cross-sectional view similar to Figures 5 and 6 but illustrating the apparatus in an advanced loading position.

While the invention is described herein as applied to mounted slide films (a), it should be understood that the invention is applicable to any generally laminar or planar member.

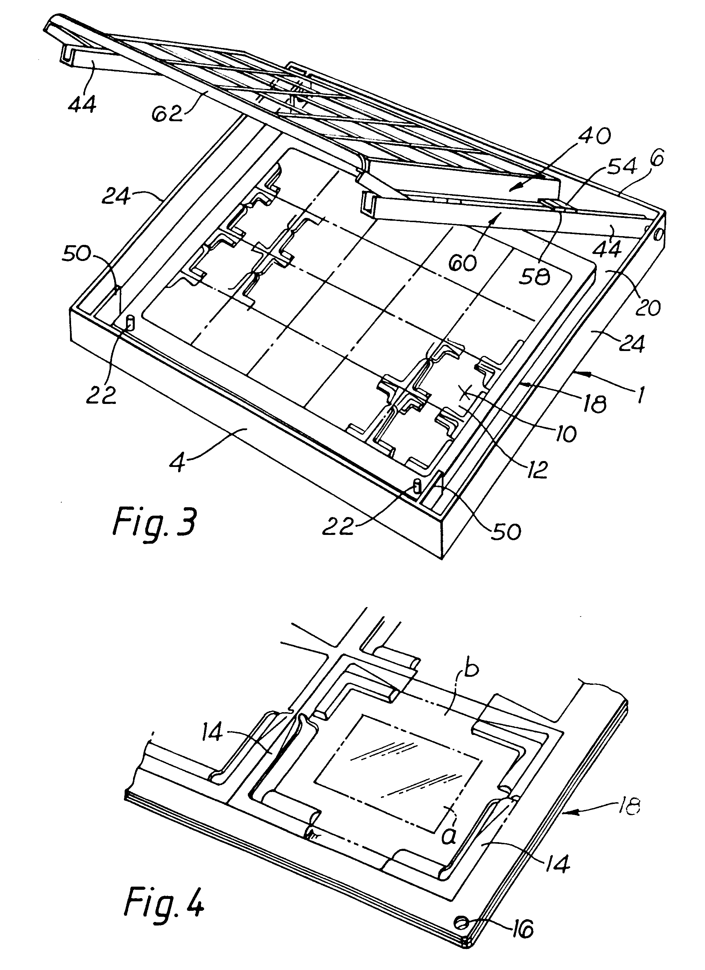

A conventional file sheet 18 as shown in Figures 3 and 4 comprises a base sheet 12 having a plurality of rectangular recessed pockets 10 aligned both in rows and in columns, the pockets being defined by an outer peripheral frame member and ribs longitudinally and transversely extending across the base sheet 12 and intersecting each other. Each pocket 10 is provided with retaining tabs 14 extending along opposed side ribs for retaining opposed side grasp portions (b) of the mount of a mounted slide film (a) against the base sheet 12. The peripheral frame member has a pair of locating holes 16 formed therethrough adjacent its front opposed corners for a purpose which will become apparent hereinafter.

The apparatus according to the invention comprises a rectangular box-like outer case 1 composed of a front wall 4, a rear wall 6, opposed side walls 24 connecting the front and rear walls, and a bottom wall 20. The bottom wall 20 of the case 1 has a pair of spaced locating pegs 22 upstanding therefrom. A file sheet 18 may be fixed in position on the bottom wall 20 by passing the pegs 22 through the holes 16 of the file sheet. The bottom wall 20 thus serves as a mounting plate for the file sheet 18.

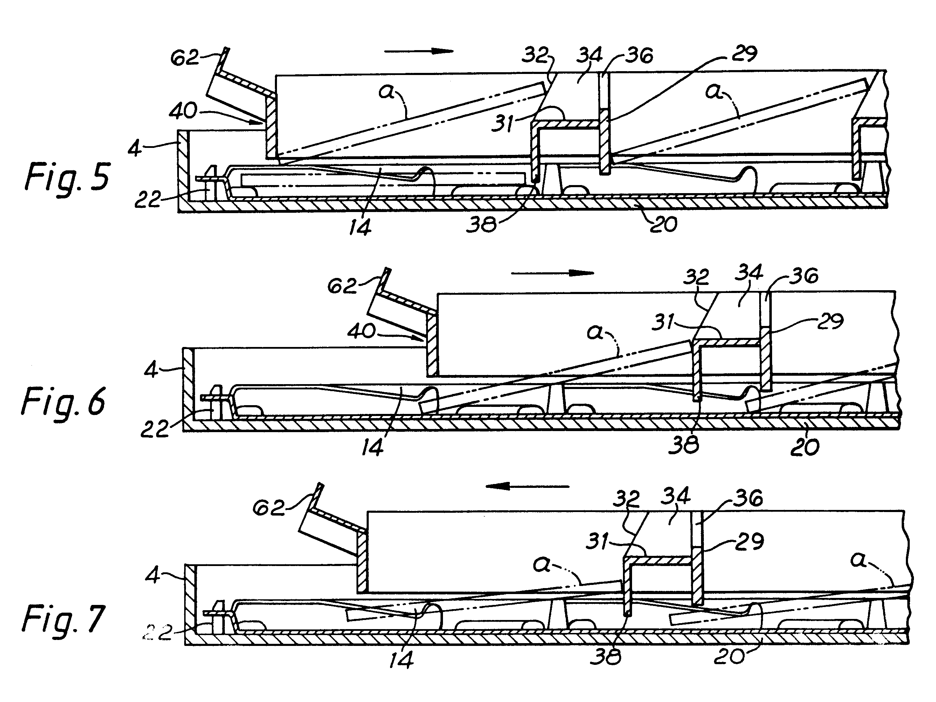

Disposed within the outer case 1 is a rectangular inner framework 26 comprising a front frame member 51, a rear frame member 51' and opposed side frame members 52, 52. The inner framework 26 is provided with a number of rectangular compartments 30 positionable in vertical alignment with the respective rectangular pockets 10 of the file sheet 18 so as to permit insertion of mounted slide films (a) into the pockets. The compartments 30 are defined by the peripheral frame members 51, 51', and 52 and longitudinally-extending, parallel partition panels 28, and transversely-extending parallel partition panels 29 intersecting with the longitudinal panels. The bottom ends of the frame members 51, 51', 52 and partition panels 28, 29 which form the inner framework 26 are all spaced above from the bottom wall or file sheet mounting plate 20 of the case 1 so as to define a space between the bottom of the inner framework and the mounting plate 20 to accommodate a file sheet 18, as seen in Figures 5 to 7.

The size or extent of the inner framework 26 in its horizontal plane is smaller than that of the mounting plate 20.

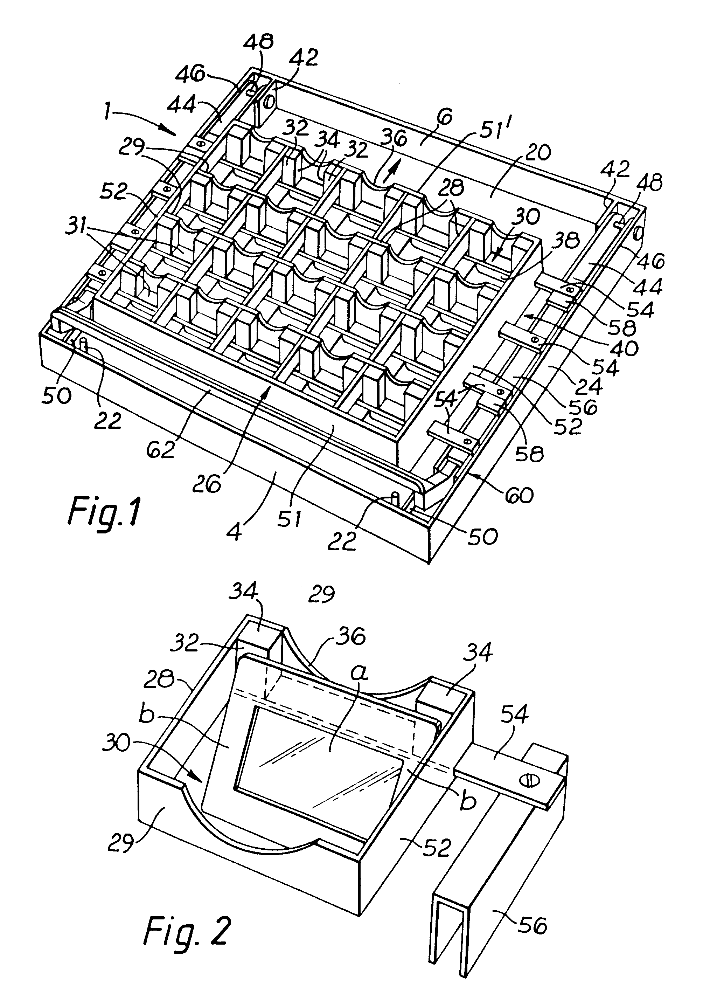

A generally horizontal ledge 31 (Figures 1 and 5) extends transversely of each transverse partition panel 29 and across the rear and lower areas of the compartments 30.

A pair of upright rectangular posts 34 extend upwardly from each ledge 31 within opposed rear corners of each compartment 30. Each post 34 has a ramp surface 32 facing towards the front of the case 1 for the purpose as will become apparent hereinbelow and as best seen in Figures 5, 6 and 7.

Each transverse partition panel 29 is formed at its upper edge with notches 36, one for each of the compartments 30 so as to permit easy insertion and removal of mounted slide films (a).

A pawl member 38 depends vertically downwardly from each of the horizontal ledges 31 adjacent its forward edge. The pawl member 38 should have a sufficient rigidity to force slide films (a) forwardly into the file sheet pockets 10 beneath the retaining tabs 14 as well as to engage with and retain in place the front edges of the slide films (a) inserted in a pocket 10 positioned immediately behind a given pawl member. Although not illustrated in the drawings, the pawl member 38 may be somewhat yieldable to flex rearwardly when the slide film is completely inserted into the pocket 10, thereby to prevent the mount of the film from being damaged by continuing forward movement of the pawl member. Alternatively, the pawl member 38 may be vertically self-adjustable so as to accommodate different thicknesses of slide film mount.

A pair of bearing lugs 42 (Figure 1) extend forwardly from the rear wall 6 of the outer case 1 adjacent its opposed ends. A pair of channel-shaped rail members 44 extend longitudinally along and adjacent the respective side walls 24 of the outer case 1 and are held at their rear ends 46 between the corresponding bearing lugs 42 and the facing side walls 24 and mounted for vertical pivotal movement by pivot shafts 48 passed through the side walls 6, rail members 44 and bearing lugs 42. The front wall 4 of the case 1 has a pair of retainer lugs 50 extending rearwardly therefrom in longitudinal alignment with the respective bearing lugs 42 to hold the forward ends of the rail members 44.

A plurality of longitudinally-spaced support arms 54 extend laterally outwardly from each of the side frame members 52 of the inner framework 26. A channel-shaped slide member 56 is secured at its web portion to, and depends from, the undersurface of each of support arm 54. The slide members 56 are slidably received in the rail members 44 for longitudinal sliding movements therealong. A plurality of stop members 58 are positioned at predetermined intervals and fixed to the upper edges of the rail members 44 to limit the longitudinal reciprocal movements of the support arms 54 and hence the inner framework 26 along the rail members as well as to prevent withdrawal of the slide members 56 from the rail members.

The inner framework 26 and the partition panels 28 and 29 constitute a slide structure 40, and the support arms 54 with slide members 56 and the rail members 44 constitute slide means 60. The slide members 56 are adapted to fit in the respective rail members 44 for longitudinal sliding movements. Thus, with the slide members 56 slidably fitted in the rail members 44, the slide structure 40 may be moved from an initial position in which mounted slide film (a) may be inserted in the compartments 30 to a forward position to force the slide films into the file sheet pockets 10 in a manner to be described hereinbelow.

A generally U-shaped handle 62 is provided for pivoting the slide structure 40 in unison with the rail members 44 about the pivot shafts 48 between the closed position proximate the mounting plate 20 and the file sheet 18 placed on the plate, and the open position away from the mounting plate 20. More specifically, the U-shaped handle 62 has a pair of opposed leg portions longitudinally slidably received in the respective rail members 44 and fixed to the slide members 56 so that the handle 62 may be used not only to swing the slide structure 40 between its closed and open positions but also to move the slide structure to and fro along the rail members 44. The bight portion of the handle 62 is spaced from an extends parallel to the front frame member 51 of the inner framework 26.

If desired, the file sheet mounting plate 20 may be formed of a light-transmissible and diffusable material, and a light source for illumination (not shown) may be built in under the mounting plate 20.

In operation, the user grasps the handle 62 to lift the slide structure 40 upwards to the open position as shown in Figure 3 and then inserts an empty file sheet 18 onto the base plate or mounting plate 20 of the outer case 1 with the locating holes 16 fitted over the locating pegs 22. Once the file sheet 18 is thus fixed in place on the mounting plate 20, the slide structure 40 is moved down to its closed position proximate, and parallel, to the mounting plate 20 and the file sheet 18 as shown in Figure 1, and then moved rearwardly along the rail members 44 to its initial position as shown in Figure 5. In this position a number of planar data objects or materials (a) such as mounted slide films, slides, coins or the like are placed one by one in the respective compartments 30 with the rear edges of the planar materials bearing against the ramps surfaces 32 of the posts 34 in the respective compartments 30 while the front edges of the materials rest on the retaining tabs 14.

If the planar data materials (a) are mounted slide films and the apparatus is of a light box type in which the mounting plate 20 is made of a light-transmissible and diffusable material and illumination means are disposed under the mounting plate, the slide films may be illuminated from beneath so that the user can view the contents of the slide films, whereby he can readily inspect the proper order of array of slide films as well as the alignment or attitude of slide films with respect to the compartments. If there is any irregularity with respect to the order of array and/or attitude of slide films, the user can make any necessary corrections.

Then, as the user moves the slide structure 40 further rearwardly from the initial intermediate position shown in Figure 5 to the predetermined rearward position shown in Figure 6, all the planar materials or objects (a) are simultaneouslY moved rearwardly as the lower forward ends of the grasp portions (b) of the planar materials (a) slide over the upper surfaces of the retaining tabs 14 of the file sheet pockets 10 and drop off the rear ends of the retaining tabs onto the file sheet at the open ends of the grasping gaps between the file sheet and the retaining tabs, while the rear ends of the planar materials slide down the ramp surfaces 32 of the posts 34 into abutting engagement with the front surfaces of the respective pawl members 38 so that the planar materials assume a position approximately parallel to the plane of the file sheet, as shown in Figure 6.

The user then moves the slide structure 40 forwardly towards the initial position, to a position shown in Figure 7. During this movement, the pawl members 38, in abutment with the rear ends of the planar materials (a), force the latter forwardly into the grasping gaps beneath the respective retaining tabs 14 until the planar materials are simultaneously held between the retaining tabs 14 and the upper surface of the file sheet 18 in the respective pockets 10.

Upon completion of the operation of forcing the planar materials or objects (a) into the file sheet pockets 10, the user may grasp the handle 62 to swing the slide structure 40 upwardly away from the mounting plate 20 and file sheet 18, so as to be able to remove the file sheet 18 from the mounting plate, having now the planar materials fitted in its pockets 10.

It will be appreciated that the present invention provides a very simple and convenient method and apparatus for simultaneously inserting a number of planar materials, or objects, such as mounted slide films, slides, coins and the like, into a file sheet which is adapted to hold such planar materials. Any desired number of planar materials within the range of the capacity of the file sheet for holding the same may be placed into the pockets 10 in the file sheet simultaneously simply by sliding the slide structure to and fro once only.

## Claims

1. A method of simultaneously inserting a number of laminar articles (a), such as mounted slide films, slides, coins and the like into a file sheet (18), said file sheet comprising a base sheet (12) having a plurality of recessed pockets (10) arranged both in rows and in columns, each of said pockets having a pair of retaining tabs (14) on opposed sides for retaining opposed side grasp portions (b) of one of the laminar articles against the base sheet (12) in each pocket (10), the method comprising the steps of: providing a slide structure (40) having a plurality of compartments (30) which are, when positioned generally parallel with the plane of the mounting plate, in alignment with the corresponding pockets (10) of the file sheet (18);
positioning said slide structure (40) at an initial intermediate position relative to said file sheet (18);
placing the laminar articles (a) successively in the respective compartments (30) of said slide structure (40) so that the rear edges of the laminar articles are in abutting engagement with the rear walls of the respective compartments (30) while the front edges of the laminar materials rest on the retaining tabs (14) of said file sheet (18);
moving the slide structure (40) rearwardly from the initial intermediate position to a predetermined rearward position to place the front ends of the grasp portions (b) of the laminar articles at rearwardly open inlets of the grasping gaps between said opposed side retaining tabs (14) of the respective pockets (10) and the base sheet (12); and
then moving the slide structure forwardly from said rearward position toward said initial intermediate position to move all the laminar articles (a) simultaneously forwardly beneath said retaining tabs (14) and through said inlets into said gaps to be retained by said tabs against the base sheet.

2. Apparatus for simultaneously inserting a number of laminar articles (a) into a file sheet (18), comprising:
a file sheet (18) comprising a base sheet (12) having a plurality of rectangular recessed pockets (10) arranged both in rows and in columns, each of the pockets having a pair of retaining tabs (14) on its opposed sides for retaining opposite side grasp portions (b) of one of the laminar articles against the base sheet (12) in each pocket (10);
a file sheet mounting plate (20) for removably securing the file sheet (18) in position thereon;
a slide structure (40) having a plurality of compartments (30) which are, when positioned generally parallel with the plane of the mounting plate (20), in alignment with the corresponding pockets (10) of the file sheet (18), and having depending pawl members (38) provided in the lower portions of the respective compartments (30), the pawl members being engageable with the rear ends of the opposed sides grasp portions (b) of the corresponding laminar articles (a) to force the laminar articles into the respective pockets (10) beneath the retaining tabs;
slide means (60) for reciprocally moving the slide structure longitudinally through a predetermined stroke; and
means for moving the slide structure towards and away from the plane of the mounting plate (20).

3. Apparatus according to claim 2, wherein the mounting plate (20) is made of a light-transmissible and light-diffusing material.

4. Apparatus according to claim 3, wherein illumination means is disposed under the light-transmissible and light-diffusing mounting plate (20).

## Patentansprüche

1. Verfahren zum gleichzeitigen Einschieben mehrerer laminarer oder flacher Gegenstände (a), wie gerahmte Diapositivfilme, Diapositive, Münzen und dgl., in ein Ablage- oder Albumblatt (18) mit einem Grundblatt (12) mit einer Vielzahl ausgesparter Taschen (10), die sowohl in Reihen als auch in Spalten angeordnet sind und jeweils auf gegenüberliegenden Seiten zwei Haltelaschen (14) zum Festhalten von auf gegenüberliegender Seite befindlichen Erfassungsabschnitten (b) eines der flachen Gegenstände gegen das Grundblatt (12) in jeder Tasche (10) aufweisen, wobei das Verfahren folgende Schritte umfaßt:
Vorsehen einer Schiebestruktur (40) mit einer Vielzahl von Kammern (30), die dann, wenn sie im wesentlichen parallel zur Ebene der Montageplatte positioniert sind, mit den betreffenden Taschen (10) des Albumblatts (18) ausgefluchtet sind,
Positionieren der Schiebestruktur (40) in einer anfänglichen Zwischenstellung relativ zum Albumblatt (18),
aufeinanderfolgendes Einbringen der flachen Gegenstände (a) in die jeweiligen Kammern (30) der Schiebestruktur (40), so daß die Hinterkanten der flachen Gegenstände an den Rückwänden der betreffenden Kammern (30) anliegen, während die Vorderkanten der flachen Gegenstände auf den Haltelaschen (14) des Albumblatts (18) ruhen bzw. aufliegen,
Rückwärtsbewegen der Schiebestruktur (40) aus der anfänglichen Zwischenstellung in eine vorbestimmte rückwärtige Stellung, um die Vorderenden der Erfassungsabschnitte (b) der flachen Gegenstände an rückwärts offenen Einlässen der Erfassungsspalte zwischen auf der gegenüberliegenden Seite befindlichen Haltelaschen (14) der betreffenden Taschen (10) und des Grundblatts (12) zu plazieren, und
anschließendes Vorwärtsbewegen der Schiebestruktur aus der rückwärtigen Stellung in Richtung auf die anfängliche Zwischenstellung, um alle flachen Gegenstände (a) gleichzeitig vorwärts unter die Haltelaschen (14) und durch die Einlässe in die Spalte zu bewegen oder zu verschieben, so daß sie durch die Laschen gegen das Grundblatt gehalten werden.

2. Vorrichtung zum gleichzeitigen Einschieben mehrerer laminarer oder flacher Gegenstände (a) in ein Ablage- oder Albumblatt (18), umfassend:
ein Albumblatt (18) mit einem Grundblatt (12) mit einer Vielzahl von rechteckigen ausgesparten Taschen (10), die sowohl in Reihen als auch Spalten angeordnet sind und jeweils auf ihren gegenüberliegenden Seiten zwei Haltelaschen (14) zum Festhalten von auf gegenüberliegender Seite befindlichen Erfassungsabschnitten (b) eines der flachen Gegenstände gegen das Grundblatt (12) in jeder Tasche (10) aufweisen,
eine Albumblatt-Montageplatte (20) zum abnehmbaren Befestigen des Albumblatts (18) in einer Position darauf,
eine Schiebestruktur (40) mit einer Vielzahl von Kammern (30), die dann, wenn sie im wesentlichen parallel zur Ebene der Montageplatte (20) positioniert sind, mit den betreffenden Taschen (10) des Albumblatts (18) ausgefluchtet sind, und mit in den unteren Abschnitten der betreffenden Kammern (30) vorgesehenen, nach unten ragenden Klauenelementen (38), die mit den hinteren Enden der auf gegenüberliegenden Seiten befindlichen Erfassungsabschnitte (b) der betreffenden flachen Gegenstände (a) in Eingriff bringbar sind, um die flachen Gegenstände in die betreffenden Taschen (10) unter die Haltelaschen hineinzudrücken,
eine Schiebeeinrichtung (60) zum hin- und hergehenden Längsverschieben der Schiebestruktur über einen vorbestimmten Hub und
eine Einrichtung zum Bewegen der Schiebestruktur auf die Ebene der Montageplatte (20) hin und von ihr hinweg.

3. Vorrichtung nach Anspruch 2, wobei die Montageplatte (20) aus einem lichtdurchlässigen und lichtstreuenden Werkstoff hergestellt ist.

4. Vorrichtung nach Anspruch 3, wobei unter der lichtdurchlässigen und lichtstreuenden Montageplatte (20) eine Beleuchtungseinrichtung angeordnet ist.

## Revendications

1. Procédé d'insertion simultanée d'un nombre déterminé d'articles laminaires (a), tels que des films à diapositives montées sur cadre, des diapositives, des pièces de monnaies et analogue, dans une gaine de stockage (18) comprenant une feuille de base (12) comportant une pluralité de poches en dépression (10), disposées à la fois en rangées et en colonnes, chacune desdites poches comprenant un couple de pattes de maintien (14) situées sur les côtés opposés, en vue de retenir des parties de prise latérales (b) opposées, de l'un des articles laminaires, contre la feuille de base (12) dans chaque poche (10), le procédé comprenant les étapes suivantes :
fourniture d'une structure de coulissement (40) dotée d'une pluralité de compartiments (30) qui, une fois positionnés, sont situés sensiblement parallèlement au plan de la plaque de montage, en alignement par rapport aux poches (10) correspondantes de la gaine de stockage (18);
positionnement de ladite structure de coulissement (40) en une position intermédiaire initiale par rapport à la dite gaine de stockage (18);
mise en place des articles laminaires (a) successivement dans les compartiments (30) respectifs de ladite structure de coulissement (40), de façon que les bords arrière des articles laminaires soient en contact de butée avec les parois arrière des compartiments (30) respectifs, tandis que les bords avant des matériaux. laminaires reposent sur les pattes de maintien (14) de ladite gaine de stockage (18);
déplacement de la structure de glissement (40) vers l'arrière de la position intermédiaire initiale, en une position arrière prédéterminée, de façon à placer les extrémités avant des parties de saisie (b) des articles laminaires sur des entrées ouvertes à l'arrière des interstices de saisie existant entre lesdites pattes de maintien latérales (14) opposées des poches (10) respectives et la feuille de base (12); et, ensuite,
déplacement de la structure de coulissement vers l'avant de ladite position arrière, en direction de ladite position intermédiaire initiale, afin de déplacer la totalité des articles laminaires (a) simultanément vers l'avant, sous lesdites pattes de maintien (14) et à travers lesdites entrées, dans lesdits interstices à retenir à l'aide desdites pattes, contre la feuille de base.

2. Dispositif d'insertion simultanée d'un nombre déterminé d'articles laminaires (a) dans une gaine de stockage (18) comprenant :
une gaine de stockage (18) comprenant une feuille de base (12), comportant une pluralité de poches en dépression (10), disposées à la fois en rangées et en colonnes, chacune desdites poches comprenant un couple de pattes de maintien (14) situées sur ses côtés opposés, en vue de retenir des parties de prise latérales (b) opposées de l'un des articles laminaires, contre la feuille de base (12) dans chaque poche (10);
une plaque de montage de gaine de stockage (20), pour fixer en position sur elle, de façon amovible, la gaine de stockage (18);
une structure de coulissement (40), dotée d'une pluralité de compartiments (30) qui, une fois positionnés, sont situés sensiblement parallèlement au plan de la plaque de montage (20), en alignement par rapport aux poches (10) correspondantes de la gaine de stockage (18) et présentant des cliquets (38) associés prévus dans les parties inférieures des compartiments (30) respectifs,
les cliquets étant susceptibles d'être mis en contact avec les extrémités arrière des parties de prise latérales (b) opposées des articles laminaires (a) correspondants, pour forcer les articles laminaires à entrer à l'intérieur des poches (10) respectives, sous les pattes de maintien;
des moyens de coulissement (60) destinés à déplacer de façon alternative la structure de coulissement longitudinalement, de la valeur d'une course prédéterminée; et
des moyens pour déplacer la structure de coulissement, en s'approchant et en s'écartant du plan de la plaque de montage (20).

3. Dispositif selon la revendication 2, dans lequel la plaque de montage (20) est réalisée en un matériau translucide et diffusant la lumière.

4. Dispositif selon la revendication 3, dans lequel le moyen d'éclairage est disposé au-dessous de la plaque de montage (20) translucide et diffusant la lumière.
